(19) Europäisches Patentamt / European Patent Office / Office européen des brevets

(11) EP 4 324 865 A1

(12) **EUROPEAN PATENT APPLICATION**
published in accordance with Art. 153(4) EPC

(43) Date of publication:
**21.02.2024 Bulletin 2024/08**

(21) Application number: **22788176.0**

(22) Date of filing: **13.04.2022**

(51) International Patent Classification (IPC):
***C08G 59/40*** (2006.01) ***C08G 73/10*** (2006.01)
***C09J 11/04*** (2006.01) ***C09J 11/06*** (2006.01)
***C08L 101/00*** (2006.01) ***C09J 163/00*** (2006.01)
***C09J 179/02*** (2006.01) ***C09J 179/04*** (2006.01)
***C09J 201/00*** (2006.01) ***C09J 7/35*** (2018.01)

(52) Cooperative Patent Classification (CPC):
**C08G 59/40; C08G 73/10; C08L 101/00; C09J 7/35; C09J 11/04; C09J 11/06; C09J 163/00; C09J 179/02; C09J 179/04; C09J 201/00**

(86) International application number:
**PCT/JP2022/017656**

(87) International publication number:
**WO 2022/220253 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 JP 2021068373**

(71) Applicant: **SEKISUI CHEMICAL CO., LTD.**
**530-0047 (JP)**

(72) Inventors:
- **WAKIOKA, Sayaka**
  **Mishima-gun, Osaka 618-0021 (JP)**
- **HOUJOU, Kentarou**
  **Mishima-gun, Osaka 618-0021 (JP)**
- **NAKAMURA, Yuu**
  **Mishima-gun, Osaka 618-0021 (JP)**
- **KOUMA, Aki**
  **Mishima-gun, Osaka 618-0021 (JP)**
- **SHINDO, Masami**
  **Mishima-gun, Osaka 618-0021 (JP)**
- **NISHIZAWA, Hidehito**
  **Mishima-gun, Osaka 618-0021 (JP)**
- **OWASHI, Keigo**
  **Mishima-gun, Osaka 618-0021 (JP)**

(74) Representative: **Cabinet Beau de Loménie**
**158, rue de l'Université**
**75340 Paris Cedex 07 (FR)**

# (54) CURABLE RESIN COMPOSITION, CURED PRODUCT, ADHESIVE AGENT, AND ADHESIVE FILM

(57) The present invention aims to provide a curable resin composition excellent in heat resistance, thermal conductivity, and adhesiveness. The present invention also aims to provide a cured product of the curable resin composition, and an adhesive and an adhesive film each produced using the curable resin composition. Provided is a curable resin composition containing: a curable resin; a curing agent; and a thermally conductive filler, the curing agent including an imide oligomer, the curable resin composition having a thermal conductivity after curing of 1 W/m·K or more.

EP 4 324 865 A1

## Description

TECHNICAL FIELD

The present invention relates to a curable resin composition excellent in heat resistance, thermal conductivity, and adhesiveness. The present invention also relates to a cured product of the curable resin composition, and an adhesive and an adhesive film each produced using the curable resin composition.

BACKGROUND ART

To prevent the buildup of heat generated by electronic components, it is a common practice to employ a heat dissipation material between the electronic component and a metal heat-transfer plate as a means of heat dissipation. The use of adhesives containing curable resin compositions excellent in thermal conductivity and heat resistance as such heat dissipation materials has been studied. As a curable resin composition excellent in thermal conductivity and heat resistance, for example, Patent Literature 1 discloses an adhesive composition containing components such as an epoxy resin and a siloxane-modified polyamideimide component and Patent Literature 2 discloses a curable resin composition containing components such as a polyimide silicone resin having two or more phenolic hydroxy groups in one molecule and an epoxy resin.

CITATION LIST

- Patent Literature

Patent Literature 1: JP 2003-193016 A
Patent Literature 2: JP 2005-113059 A

SUMMARY OF INVENTION

- Technical Problem

When conventional curable resin compositions disclosed in Patent Literature 1 and Patent Literature 2 are used as adhesives for electronic components, low-molecular-weight siloxane compounds derived from these compositions adhere to the electronic components, which causes trouble such as contact failures in some cases.

When a non-silicone material is used, trouble as mentioned above do not occur, but it is difficult to find a material that has satisfactory good properties including heat resistance, thermal conductivity, and adhesiveness.

The present invention aims to provide a curable resin composition excellent in heat resistance, thermal conductivity, and adhesiveness. The present invention also aims to provide a cured product of the curable resin composition, and an adhesive and an adhesive film each produced using the curable resin composition.

- Solution to Problem

The present invention relates to a curable resin composition containing: a curable resin; a curing agent; and a thermally conductive filler, the curing agent including an imide oligomer, the curable resin composition having a thermal conductivity after curing of 1 W/m·K or more.

The present invention will be described in detail below.

The present inventors have found that when a curable resin composition containing a curable resin and an imide oligomer as a curing agent is further blended with a thermally conductive filler in a manner that the thermal conductivity after curing of the curable resin composition is 1 W/m·K or more, such a curable resin composition is excellent in heat resistance, thermal conductivity, and adhesiveness. Thus, the present invention was completed.

The lower limit of the thermal conductivity of the curable resin composition of the present invention after curing is 1 W/m·K. When the thermal conductivity after curing is 1 W/m·K or more, the curable resin composition of the present invention can be suitably used as a heat dissipation adhesive. The lower limit of the thermal conductivity after curing is preferably 1.5 W/m·K, more preferably 2 W/m·K.

The preferable upper limit of the thermal conductivity after curing is not limited, but the upper limit is practically 20 W/m·K.

The thermal conductivity can be measured at 23°C in conformity with ASTM D5470. A measuring device used

for measuring the thermal conductivity may be, for example, "T3Ster DynTIM Tester" available from Mentor, a Siemens Business. A cured product used for measuring the thermal conductivity may be prepared by drying the curable resin composition and then curing it by heating at 190°C for one hour.

The curable resin composition of the present invention contains a curable resin.

The curable resin may be, for example, an epoxy resin, a cyanate resin, a phenolic resin, a polyimide resin, a maleimide resin, a benzoxazine resin, a silicone resin, an acrylic resin, or a fluororesin. In particular, the curable resin preferably includes at least one selected from the group consisting of an epoxy resin, a cyanate resin, a maleimide resin, and a benzoxazine resin, and more preferably includes an epoxy resin. These curable resins may be used alone or in combination of two or more thereof.

Examples of the epoxy resin include bisphenol A epoxy resins, bisphenol F epoxy resins, bisphenol E epoxy resins, bisphenol S epoxy resins, 2,2'-diallylbisphenol A epoxy resins, hydrogenated bisphenol epoxy resins, propylene oxide-added bisphenol A epoxy resins, resorcinol epoxy resins, biphenyl epoxy resins, sulfide epoxy resins, diphenyl ether epoxy resins, dicyclopentadiene epoxy resins, naphthalene epoxy resins, fluorene epoxy resins, naphthylene ether epoxy resins, phenol novolac epoxy resins, ortho-cresol novolac epoxy resins, dicyclopentadiene novolac epoxy resins, biphenyl novolac epoxy resins, naphthalenephenol novolac epoxy resins, glycidylamine epoxy resins, alkylpolyol epoxy resins, rubber-modified epoxy resins, and glycidyl ester compounds. Preferred among these are epoxy resins that are liquid at 25°C because they have low viscosity that makes it easy to adjust the processability of the resulting curable resin composition. The epoxy resins may be used alone or in combination of two or more thereof.

The curable resin is preferably free from a compound having a siloxane skeleton as described later.

The curable resin composition of the present invention further contains a curing agent.

The curing agent includes an imide oligomer. The use of the imide oligomer as the curing agent allows a cured product of the curable resin composition of the present invention to have excellent heat resistance.

The imide oligomer preferably has a reactive functional group capable of reacting with the curable resin.

Though depending on the type of the curable resin used, the reactive functional group is preferably at least one selected from the group consisting of an acid anhydride group, a phenolic hydroxy group, and an amino group when an epoxy resin is used as the curable resin. Particularly preferred among these is an acid anhydride group or a phenolic hydroxy group from the standpoint of storage stability and heat resistance.

The imide oligomer preferably has the reactive functional group at an end of the main chain, more preferably at both ends of the main chain.

Specifically, the imide oligomer preferably has a structure represented by the following formula (1-1) or (1-2) or the following formula (2-1) or (2-2). The imide oligomer having a structure represented by the following formula (1-1) or (1-2) or the following formula (2-1) or (2-2) has better reactivity and compatibility with the curable resin.

[Chem. 1]

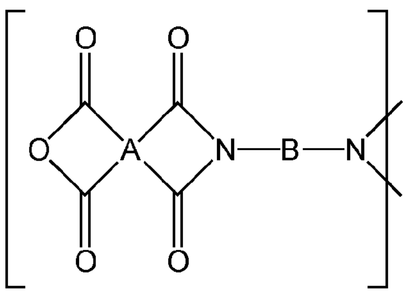

(1-1)

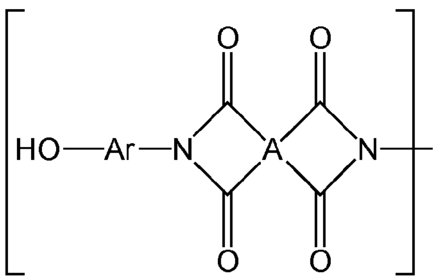

(1-2)

In the formulas (1-1) and (1-2), A is an acid dianhydride residue; in the formula (1-1), B is an aliphatic diamine residue or an aromatic diamine residue; and in the formula (1-2), Ar is an optionally substituted divalent aromatic group.

[Chem. 2]

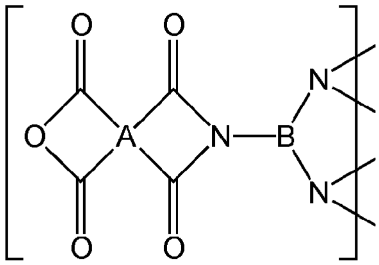

(2 − 1)

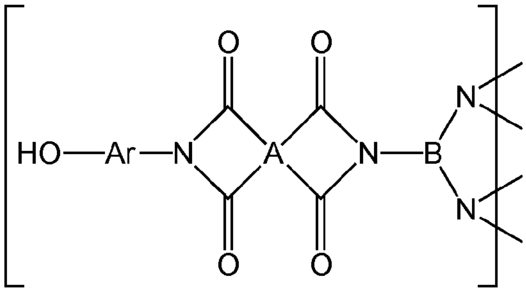

(2 − 2)

In the formulas (2-1) and (2-2), A is an acid dianhydride residue and B is an aliphatic triamine residue or an aromatic triamine residue; and in the formula (2-2), Ar is an optionally substituted divalent aromatic group.

The acid dianhydride residue is preferably a tetravalent group represented by the following formula (3-1) or (3-2).

[Chem. 3]

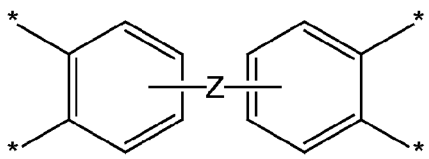

(3 − 1)

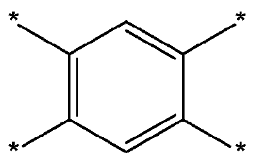

(3 − 2)

In the formulas (3-1) and (3-2), * is a binding site; and in the formula (3-1), Z is a bond, an oxygen atom, a carbonyl group, a sulfur atom, a sulfonyl group, a linear or branched divalent hydrocarbon group, or a divalent group containing an aromatic ring. When Z is a hydrocarbon group, there may be an oxygen atom between the hydrocarbon group and each aromatic ring in the formula (3-1). When Z is a divalent group containing an aromatic ring, there may be an oxygen atom between the divalent group containing an aromatic ring and each aromatic ring in the formula (3-1). In the formulas (3-1) and (3-2), a hydrogen atom of an aromatic ring may be replaced.

When Z in the formula (3-1) is a linear or branched divalent hydrocarbon group or a divalent group containing an aromatic ring, the group may be substituted.

In the case where the linear or branched divalent hydrocarbon group or the divalent group containing an aromatic ring is substituted, examples of the substituent include a halogen atom, a linear or branched alkyl group, a linear or branched alkenyl group, an alicyclic group, an aryl group, an alkoxy group, a nitro group, and a cyano group.

Examples of acid dianhydrides from which the acid dianhydride residue is derived include acid dianhydrides represented by the formula (9) described later.

When B in the formula (1-1) is the aliphatic diamine residue and when B in the formula (2-1) or (2-2) is the aliphatic triamine residue, the lower limit of the carbon number of the aliphatic diamine residue and the aliphatic triamine residue is preferably 4. With the carbon number of the aliphatic diamine residue and the aliphatic triamine residue of 4 or greater, the resulting curable resin composition has better flexibility and better processability before being cured and

better dielectric characteristics after being cured. The lower limit of the carbon number of the aliphatic diamine residue and the aliphatic triamine residue is more preferably 5, still more preferably 6.

The preferable upper limit of the carbon number of the aliphatic diamine residue and the aliphatic triamine residue is not limited, but the upper limit is practically 60.

The aliphatic diamine from which the aliphatic diamine residue is derived may be, for example, an aliphatic diamine derived from a dimer acid, a linear or branched aliphatic diamine, an aliphatic ether diamine, or an aliphatic alicyclic diamine.

Examples of the aliphatic diamine derived from a dimer acid include dimer diamines and hydrogenated dimer diamines.

Examples of the linear or branched aliphatic diamine include 1,4-butanediamine, 1,6-hexanediamine, 1,8-octanediamine, 1,9-nonanediamine, 1,10-decanediamine, 1, 11-undecanediamine, 1,12-dodecanediamine, 1,14-tetradecanediamine, 1,16-hexadecanediamine, 1,18-octadecanediamine, 1,20-eicosanediamine, 2-methyl-1,8-octanediamine, 2-methyl-1,9-nonanediamine, and 2,7-dimethyl-1,8-octanediamine.

Examples of the aliphatic ether diamine include 2,2'-oxybis(ethylamine), 3,3'-oxybis(propylamine), and 1,2-bis(2-aminoethoxy)ethane.

Examples of the aliphatic alicyclic diamine include 1,3-bis(aminomethyl)cyclohexane, 1,4-bis(aminomethyl)cyclohexane, cyclohexanediamine, methylcyclohexanediamine, and isophoronediamine.

In particular, the aliphatic diamine residue is preferably the aliphatic diamine residue derived from a dimer acid.

The aliphatic triamine from which the aliphatic triamine residue is derived may be, for example, an aliphatic triamine derived from a trimer acid, a linear or branched aliphatic triamine, an aliphatic ether triamine, or an aliphatic alicyclic triamine.

Examples of the aliphatic triamine derived from a trimer acid include trimer triamines and hydrogenated trimer triamines.

Examples of the linear or branched aliphatic triamine include 3,3'-diamino-N-methyldipropylamine, 3,3'-diaminodipropylamine, diethylenetriamine, bis(hexamethylene)triamine, and 2,2'-bis(methylamino)-N-methyldiethylamine.

In particular, the aliphatic triamine residue is preferably the aliphatic triamine residue derived from a trimer acid.

A mixture of the dimer diamine and the trimer triamine can also be used as the aliphatic diamine and/or the aliphatic triamine.

Commercial products of the aliphatic diamine and/or aliphatic triamine derived from a dimer acid and/or a trimer acid include, for example, an aliphatic diamine and/or an aliphatic triamine available from BASF, and an aliphatic diamine and/or an aliphatic triamine available from Croda International Plc.

Examples of the aliphatic diamine and/or the aliphatic triamine available from BASF include Versamine 551 and Versamine 552.

Examples of the aliphatic diamine and/or the aliphatic triamine available from Croda International Plc include Priamine 1071, Priamine 1073, Priamine 1074, and Priamine 1075.

When B in the formula (1-1) is the aromatic diamine residue, the aromatic diamine residue is preferably a divalent group represented by the following formula (4-1) or (4-2).

[Chem. 4]

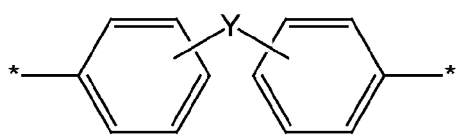

(4 − 1)

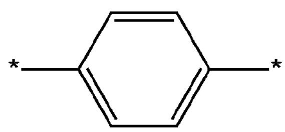

(4 − 2)

In the formulas (4-1) and (4-2), * is a binding site; and in the formula (4-1), Y is a bond, an oxygen atom, a carbonyl group, a sulfur atom, a sulfonyl group, a linear or branched divalent hydrocarbon group, or a divalent group containing an aromatic ring. When Y is a hydrocarbon group, there may be an oxygen atom between the hydrocarbon group and each aromatic ring in the formula (4-1). When Y is a divalent group containing an aromatic ring, there may be an oxygen atom between the divalent group containing an aromatic ring and each aromatic ring in the formula (4-1). In the formulas (4-1) and (4-2), a hydrogen atom of an aromatic ring may be replaced.

When Y in the formula (4-1) is a linear or branched divalent hydrocarbon group or a divalent group containing an aromatic ring, the group may be substituted.

Examples of the substituent in the case where the linear or branched divalent hydrocarbon group or the divalent group containing an aromatic ring is substituted include a halogen atom, a linear or branched alkyl group, a linear or branched alkenyl group, an alicyclic group, an aryl group, an alkoxy group, a nitro group, and a cyano group.

The aromatic diamine from which the aromatic diamine residue is derived may be, for example, an aromatic diamine that is a diamine represented by the formula (10) described later.

The curing agent is preferably free from a compound having a siloxane skeleton, as will be described later. In particular, the imide oligomer is preferably an imide oligomer not having a siloxane skeleton in the structure because an imide oligomer having a siloxane skeleton in the structure may lower the glass transition temperature of the cured product of the resulting curable resin composition or contaminate an adherend to cause adhesion failures.

The molecular weight of the imide oligomer is preferably 5,000 or less. With the molecular weight of the imide oligomer being 5,000 or less, the cured product of the resulting curable resin composition has better long-term heat resistance. The upper limit of the molecular weight of the imide oligomer is more preferably 4,000, still more preferably 3,000.

In particular, the imide oligomer having a structure represented by the formula (1-1) or (2-1) preferably has a molecular weight of 900 or more and 5,000 or less, and the imide oligomer having a structure represented by the formula (1-2) or (2-2) preferably has a molecular weight of 550 or more and 4,000 or less. The lower limit of the molecular weight of the imide oligomer having a structure represented by the formula (1-1) or (2-1) is more preferably 950, still more preferably 1,000. The lower limit of the molecular weight of the imide oligomer having a structure represented by the formula (1-2) or (2-2) is more preferably 580, still more preferably 600.

Herein, for a compound whose molecular structure is identifiable, the "molecular weight" means a molecular weight determined from the structural formula. For a compound having a broad distribution of degree of polymerization or a compound having an unidentifiable modified portion, the "molecular weight" may be expressed in a number average molecular weight. The "number average molecular weight" herein is a value determined in terms of polystyrene by gel permeation chromatography (GPC) using tetrahydrofuran as a solvent. The column used to measure the number average molecular weight in terms of polystyrene by GPC may be JAIGEL-2H-A (available from Japan Analytical Industry Co., Ltd.), for example.

Specifically, the imide oligomer is preferably an imide oligomer represented by the following formula (5-1), (5-2), (5-3), (5-4), or (5-5) or an imide oligomer represented by the following formula (6-1), (6-2), (6-3), (6-4), (6-5), or (6-6).

[Chem. 5]

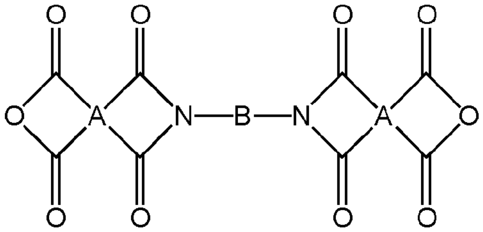

(5 − 1)

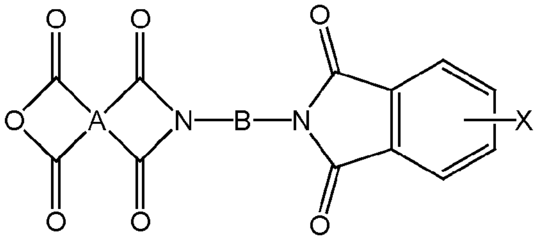

(5 − 2)

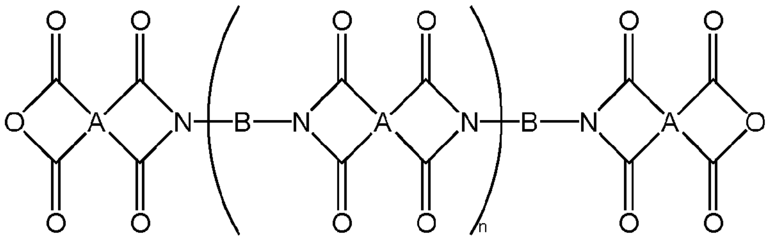

(5 − 3)

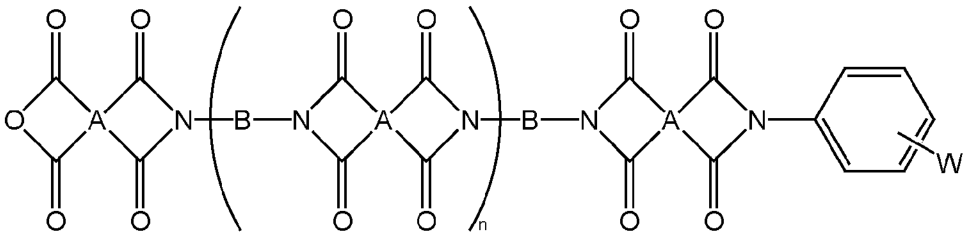

(5 − 4)

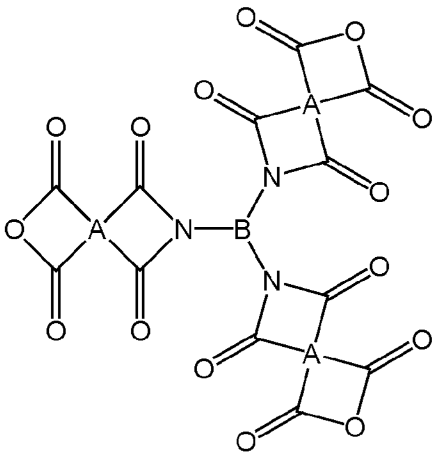

(5 − 5)

In the formulas (5-1) to (5-5), A is the acid dianhydride residue. In each of the formulas (5-1) to (5-5), As may be the same as or different from each other. In the formulas (5-1) to (5-4), B is the aliphatic diamine residue or the aromatic diamine residue. In each of the formulas (5-3) and (5-4), Bs may be the same as or different from each other. In the formula (5-5), B is the aliphatic triamine residue or the aromatic triamine residue. In the formula (5-2), X is a hydrogen atom, a halogen atom, or an optionally substituted monovalent hydrocarbon group. In the formula (5-4), W is a hydrogen atom, a halogen atom, or an optionally substituted monovalent hydrocarbon group. In the formulas (5-3) and (5-4), n is the number of repetitions.

[Chem. 6]

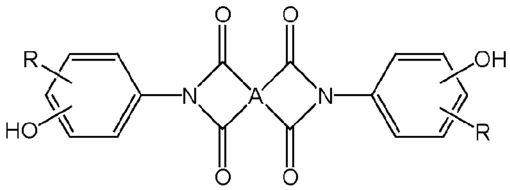

(6－1)

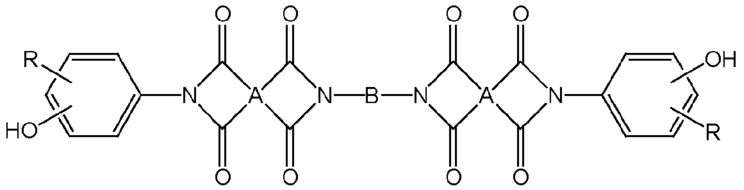

(6－2)

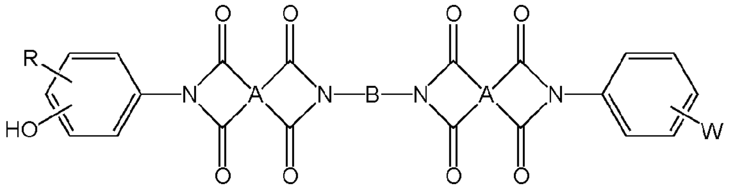

(6－3)

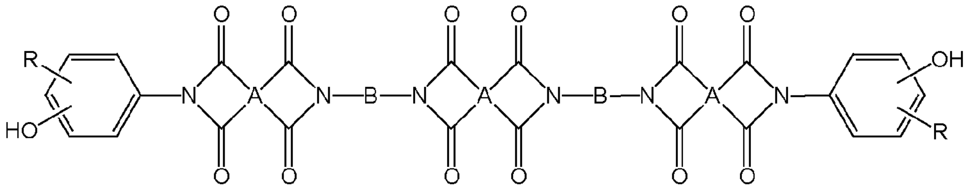

(6－4)

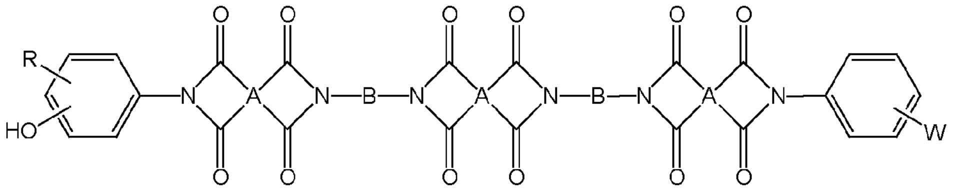

(6－5)

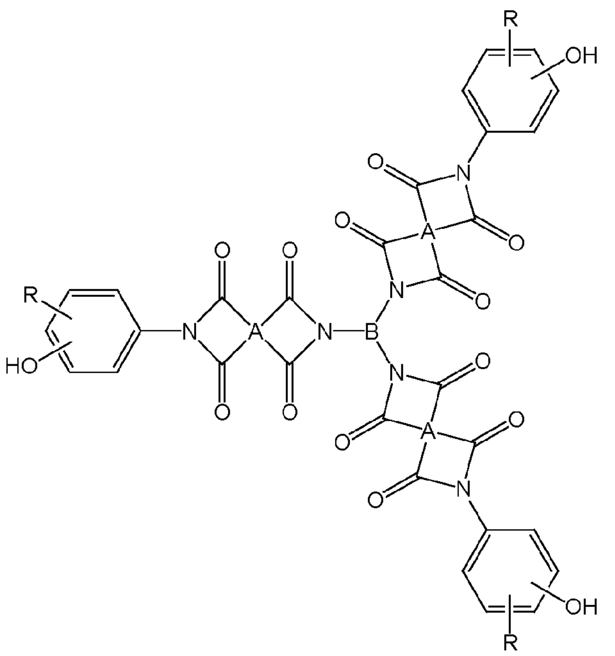

(6－6)

In the formulas (6-1) to (6-6), A is the acid dianhydride residue. In each of the formulas (6-1) to (6-6), As may be the same as or different from each other. In the formulas (6-1) to (6-6), R is a hydrogen atom, a halogen atom, or an optionally substituted monovalent hydrocarbon group. In each of the formulas (6-1), (6-2), (6-4), and (6-6), Rs may be the same as or different from each other. In the formulas (6-3) and (6-5), W is a hydrogen atom, a halogen atom, or an optionally substituted monovalent hydrocarbon group. In the formulas (6-2) to (6-4), B is the aliphatic diamine residue or the aromatic diamine residue. In the formulas (6-4) and (6-5), Bs may be the same as or different from each other. In the formula (6-6), B is the aliphatic triamine residue or the aromatic triamine residue.

A in the formulas (5-1) to (5-5) and the formulas (6-1) to (6-6) is preferably a tetravalent group represented by the following formula (7-1) or (7-2).

[Chem. 7]

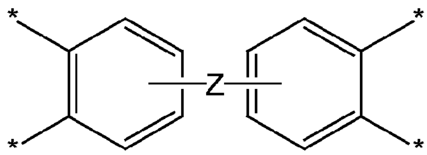

(7 − 1)

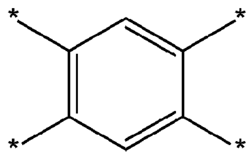

(7 − 2)

In the formulas (7-1) and (7-2), * is a binding site; and in the formula (7-1), Z is a bond, an oxygen atom, a carbonyl group, a sulfur atom, a sulfonyl group, a linear or branched divalent hydrocarbon group, or a divalent group containing an aromatic ring. When Z is a hydrocarbon group, there may be an oxygen atom between the hydrocarbon group and each aromatic ring in the formula (7-1). When Z is a divalent group containing an aromatic ring, there may be an oxygen atom between the divalent group containing an aromatic ring and each aromatic ring in the formula (7-1). In the formulas (7-1) and (7-2), a hydrogen atom of an aromatic ring may be replaced.

B in the formulas (5-1) to (5-4) and the formulas (6-2) to (6-5) is preferably a divalent group represented by the following formula (8-1) or (8-2).

[Chem. 8]

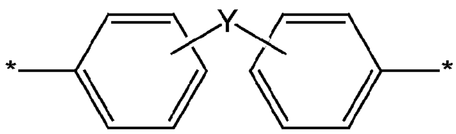

(8 − 1)

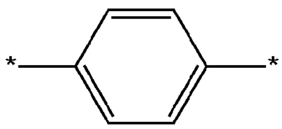

(8 − 2)

In the formulas (8-1) and (8-2), * is a binding site; and in the formula (8-1), Y is a bond, an oxygen atom, a carbonyl group, a sulfur atom, a sulfonyl group, a linear or branched divalent hydrocarbon group, or a divalent group containing an aromatic ring. When Y is a hydrocarbon group, there may be an oxygen atom between the hydrocarbon group and each aromatic ring in the formula (8-1). When Y is a divalent group containing an aromatic ring, there may be an oxygen atom between the divalent group containing an aromatic ring and each aromatic ring in the formula (8-1). In the formulas (8-1) and (8-2), a hydrogen atom of an aromatic ring may be replaced.

A method for producing an imide oligomer having a structure represented by the formula (1-1) may be, for example, a method including reacting an acid dianhydride represented by the following formula (9) with a diamine represented by the following formula (10). An imide oligomer having a structure represented by the formula (2-1) can be produced by the same method in which an aliphatic triamine or an aromatic triamine is used instead of the diamine represented by the following formula (10).

[Chem. 9]

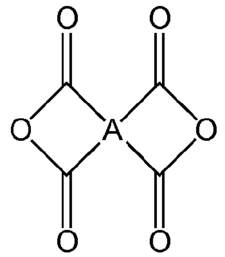

(9)

In the formula (9), A is the same tetravalent group as A in the formula (1-1).

[Chem. 10]

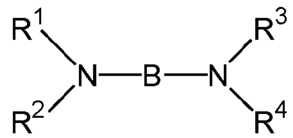

(10)

In the formula (10), B is the same divalent group as B in the formula (1-1), and $R^1$ to $R^4$ are each independently a hydrogen atom or a monovalent hydrocarbon group.

The following shows a specific exemplary method including reacting an acid dianhydride represented by the formula (9) with a diamine represented by the formula (10).

First, a diamine represented by the formula (10) is dissolved in a solvent in which the amic acid oligomer to be obtained by the reaction is soluble (e.g., N-methylpyrrolidone). To the resulting solution is added an acid dianhydride represented by the formula (9), and the mixture is reacted to give an amic acid oligomer solution. Next, the solvent is removed by heating, pressure reduction, or the like. Then, the amic acid oligomer is reacted by heating at about 200°C or higher for at least one hour. An imide oligomer having a desired number average molecular weight and having a structure represented by the formula (1-1) at both ends can be obtained by adjusting the molar ratio between the acid dianhydride represented by the formula (9) and the diamine represented by the formula (10) and the imidization conditions.

By replacing part of the acid dianhydride represented by the formula (9) with an acid anhydride represented by the following formula (11), it is possible to produce an imide oligomer having a desired number average molecular weight and having a structure represented by the formula (1-1) at one end and a structure derived from the acid anhydride represented by the formula (11) at the other end. In this case, the acid dianhydride represented by the formula (9) and the acid anhydride represented by the formula (11) may be added at the same time or separately.

By replacing part of the diamine represented by the formula (10) with a monoamine represented by the following formula (12), it is possible to produce an imide oligomer having a desired number average molecular weight and having a structure represented by the formula (1-1) at one end and a structure derived from the monoamine represented by the formula (12) at the other end. In this case, the diamine represented by the formula (10) and the monoamine represented by the formula (12) may be added at the same time or separately.

[Chem. 11]

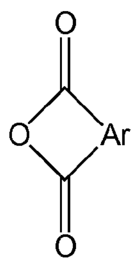

(11)

In the formula (11), Ar is an optionally substituted divalent aromatic group.

[Chem. 12]

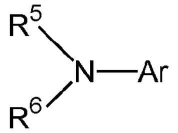

(1 2)

In the formula (12), Ar is an optionally substituted monovalent aromatic group, and $R^5$ and $R^6$ are each independently a hydrogen atom or a monovalent hydrocarbon group.

A method for producing an imide oligomer having a structure represented by the formula (1-2) may be, for example, a method including reacting an acid dianhydride represented by the formula (9) with a phenolic hydroxy group-containing monoamine represented by the following formula (13) or a method including reacting an acid dianhydride represented by the formula (9), a diamine represented by the formula (10), and a phenolic hydroxy group-containing monoamine represented by the formula (13). An imide oligomer having a structure represented by the formula (2-2) can be produced by the same method in which an aliphatic triamine or an aromatic triamine is used instead of the diamine represented by the formula (10).

[Chem. 13]

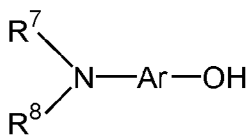

(1 3)

In the formula (13), Ar is an optionally substituted divalent aromatic group, and $R^7$ and $R^8$ are each independently a hydrogen atom or a monovalent hydrocarbon group.

The following shows a specific exemplary method including reacting an acid dianhydride represented by the formula (9) with a phenolic hydroxy group-containing monoamine represented by the formula (13).

First, a phenolic hydroxy group-containing monoamine represented by the formula (13) is dissolved in a solvent in which the amic acid oligomer to be obtained by the reaction is soluble (e.g., N-methylpyrrolidone). To the resulting solution is added an acid dianhydride represented by the formula (9), and the mixture is reacted to give an amic acid oligomer solution. Next, the solvent is removed by heating, pressure reduction, or the like. Then, the amic acid oligomer is reacted by heating at about 200°C or higher for at least one hour. An imide oligomer having a desired number average molecular weight and having a structure represented by the formula (1-2) at both ends can be obtained by adjusting the molar ratio between the acid dianhydride represented by the formula (9) and the phenolic hydroxy group-containing monoamine represented by the formula (13) and the imidization conditions.

By replacing part of the phenolic hydroxy group-containing monoamine represented by the formula (13) with a monoamine represented by the formula (12), it is possible to produce an imide oligomer having a desired number average molecular weight and having a structure represented by the formula (1-2) at one end and a structure derived from the monoamine represented by the formula (12) at the other end. In this case, the phenolic hydroxy group-containing monoamine represented by the formula (13) and the monoamine represented by the formula (12) may be added at the same time or separately.

The following shows a specific exemplary method including reacting an acid dianhydride represented by the formula (9), a diamine represented by the formula (10), and a phenolic hydroxy group-containing monoamine represented by the formula (13).

First, a phenolic hydroxy group-containing monoamine represented by the formula (13) and a diamine represented by the formula (10) are dissolved in a solvent in which the amic acid oligomer to be obtained by the reaction is soluble (e.g., N-methylpyrrolidone). To the resulting solution is added an acid dianhydride represented by the formula (9), and the mixture is reacted to give an amic acid oligomer solution. Next, the solvent is removed by heating, pressure reduction, or the like. Then, the amic acid oligomer is reacted by heating at about 200°C or higher for at least one hour. An imide oligomer having a desired number average molecular weight and having a structure represented by the formula (1-2) at both ends can be obtained by adjusting the molar ratio of the acid dianhydride represented by the formula (9), the diamine represented by the formula (10), and the phenolic hydroxy group-containing monoamine represented by the formula (13) and the imidization conditions.

By replacing part of the phenolic hydroxy group-containing monoamine represented by the formula (13) with a monoamine represented by the formula (12), it is possible to produce an imide oligomer having a desired number average molecular weight and having a structure represented by the formula (1-2) at one end and a structure derived

from a monoamine represented by the formula (12) at the other end. In this case, the phenolic hydroxy group-containing monoamine represented by the formula (13) and the monoamine represented by the formula (12) may be added at the same time or separately.

Examples of the acid dianhydride represented by the formula (9) include pyromellitic anhydride, 3,3'-oxydiphthalic anhydride, 3,4'-oxydiphthalic anhydride, 4,4'-oxydiphthalic anhydride. 4,4'-(4,4'-isopropylidenediphenoxy)diphthalic anhydride, 4,4'-bis(2,3-dicarboxylphenoxy)diphenyl ether dianhydride, p-phenylenebis(trimellitate anhydride), and 2,3,3',4'-biphenyltetracarboxylic dianhydride.

In particular, to achieve better solubility and better heat resistance, the acid dianhydride used as a raw material of the imide oligomer is preferably an aromatic acid dianhydride having a melting point of 240°C or lower, more preferably an aromatic acid dianhydride having a melting point of 220°C or lower, still more preferably an aromatic acid dianhydride having a melting point of 200°C or lower, particularly preferably 3,4'-oxydiphthalic dianhydride (melting point 180°C) or 4,4'-(4,4'-isopropylidenediphenoxy)diphthalic anhydride (melting point 190°C).

The "melting point" as used herein means an endothermic peak temperature during heating at 10°C/min using a differential scanning calorimeter. The differential scanning calorimeter may be, for example, EXTEAR DSC6100 (available from SII Nano Technology Inc.).

Examples of aromatic diamines, among the diamines represented by the formula (10), include 3,3'-diaminodiphenylmethane, 3,4'-diaminodiphenylmethane, 4,4'-diaminodiphenylmethane, 3,3'- diaminodiphenyl ether, 3,4'-diaminodiphenyl ether, 4,4'-diaminodiphenyl ether, o-phenylenediamine, m-phenylenediamine, p-phenylenediamine, 3,3'-diaminodiphenylsulfone, 4,4'-diaminodiphenylsulfone, 1,3-bis(3-aminophenoxy)benzene, 1,3-bis(4-aminophenoxy)benzene, 1,4-bis(4-aminophenoxy)benzene, bis(4-(4-aminophenoxy)phenyl)methane, 2,2-bis(4-(4-aminophenoxy)phenyl)propane, 1,3-bis(2-(4-aminophenyl)-2-propyl)benzene, 1,4-bis(2-(4-aminophenyl)-2-propyl)benzene, 3,3'-diamino-4,4'-dihydroxyphenylmethane, 4,4'-diamino-3,3'-dihydroxyphenylmethane, 3,3'-diamino-4,4'-dihydroxyphenyl ether, bisaminophenylfluorene, bistoluidine fluorene, 4,4'-bis(4-aminophenoxy)biphenyl, 4,4'-diamino-3,3'-dihydroxyphenyl ether, 3,3'-diamino-4,4'-dihydroxybiphenyl, and 4,4'-diamino-2,2'-dihydroxybiphenyl. Preferred among these are 4,4'-diaminodiphenylmethane, 4,4'-diaminodiphenyl ether, 1,3-bis(2-(4-aminophenyl)-2-propyl)benzene, 1,4-bis(2-(4-aminophenyl)-2-propyl)benzene, 1,3-bis(3-aminophenoxy)benzene, 1,3-bis(4-aminophenoxy)benzene, and 1,4-bis(4-aminophenoxy)benzene because they are excellent in availability. More preferred are 1,3-bis(2-(4-aminophenyl)-2-propyl)benzene, 1,4-bis(2-(4-aminophenyl)-2-propyl)benzene, 1,3-bis(3-aminophenoxy)benzene, 1,3-bis(4-aminophenoxy)benzene, and 1,4-bis(4-aminophenoxy)benzene because they are excellent in solubility and heat resistance.

Examples of the acid anhydride represented by the formula (11) include phthalic anhydride, 3-methylphthalic anhydride, 4-methylphthalic anhydride, 1,2-naphthalic anhydride, 2,3-naphthalic anhydride, 1,8-naphthalic anhydride, 2,3-anthracenedicarboxylic anhydride, 4-tert-butylphthalic anhydride, 4-ethynylphthalic anhydride, 4-phenylethynylphthalic anhydride, 4-fluorophthalic anhydride, 4-chlorophthalic anhydride, 4-bromphthalic anhydride, and 3,4-dichlorophthalic anhydride.

Examples of the monoamine represented by the formula (12) include aniline, o-toluidine, m-toluidine, p-toluidine, 2,4-dimethylaniline, 3,4-dimethylaniline, 3,5-dimethylaniline, 2-tert-butylaniline, 3-tert-butylaniline, 4-tert-butylaniline, 1-naphthylamine, 2-naphthylamine, 1-aminoanthracene, 2-aminoanthracene, 9-aminoanthracene, 1-aminopyrene, 3-chloroaniline, o-anisidine, m-anisidine, p-anisidine, 1-amino-2-methylnaphthalene, 2,3-dimethylaniline, 2,4-dimethylaniline, 2,5-dimethylaniline, 3,4-dimethylaniline, 4-ethylaniline, 4-ethynylaniline, 4-isopropylaniline, 4-(methylthio)aniline, and N,N-dimethyl-1,4-phenylenediamine.

Examples of the phenolic hydroxy group-containing monoamine represented by the formula (13) include 3-aminophenol, 4-aminophenol, 4-amino-o-cresol, 5-amino-o-cresol, 4-amino-2,3-xylenol, 4-amino-2,5-xylenol, 4-amino-2,6-xylenol, 4-amino-1-naphthol, 5-amino-2-naphthol, 6-amino-1-naphthol, and 4-amino-2,6-diphenylphenol. Preferred among these are 4-amino-o-cresol and 5-amino-o-cresol because they are excellent in availability and storage stability and provide a high glass transition temperature after curing.

When the imide oligomer is produced by the production method described above, the imide oligomer is obtained as a component of a mixture (imide oligomer composition) containing raw materials and multiple types of imide oligomers having a structure represented by the formula (1-1) or multiple types of imide oligomers having a structure represented by the formula (1-2). When an aliphatic triamine or an aromatic triamine is used in place of the diamine represented by the formula (10), the imide oligomer is obtained as a component of a mixture (imide oligomer composition) containing raw materials and multiple types of imide oligomers having a structure represented by the formula (2-1) or multiple types of imide oligomers having a structure represented by the formula (2-2). When the imide oligomer composition has an imidization ratio of 70% or higher, the use of the imide oligomer composition as a curing agent leads to a cured product having better mechanical strength at high temperature and better long-term heat resistance.

The lower limit of the imidization ratio of the imide oligomer composition is preferably 75%, more preferably 80%. The preferable upper limit of the imidization ratio of the imide oligomer composition is not limited, but the upper limit is practically 98%.

The "imidization ratio" is measured using a Fourier transform infrared spectrophotometer (FT-IR) by the attenuated total reflection method (ATR method). The imidization ratio can be determined using the following formula based on the peak absorbance area near 1660 $cm^{-1}$ derived from the carbonyl group of the amic acid. The Fourier transform infrared spectrophotometer may be, for example, UMA 600 (available from Agilent Technologies, Inc.). The "Peak absorbance area of amic acid oligomer" in the following formula is the absorbance area of an amic acid oligomer prepared by reacting the acid dianhydride with the diamine or the phenolic hydroxy group-containing monoamine and then removing the solvent by evaporation or the like without the imidization step.

$$\text{Imidization ratio (\%)} = 100 \times (1 - (\text{Peak absorbance area after imidization})/(\text{Peak absorbance area of amic acid oligomer}))$$

From the standpoint of the solubility in a curable resin composition, the imide oligomer composition is preferably soluble in an amount of 3 g or more in 10 g of tetrahydrofuran at 25°C.

The lower limit of the amount of the imide oligomer in 100 parts by weight of the total of the curable resin and the curing agent (as well as a curing accelerator described later, if present) is preferably 20 parts by weight and the upper limit thereof is preferably 80 parts by weight. When the amount of the imide oligomer is within this range, the resulting curable resin composition has better flexibility and better processability before being cured and better heat resistance after being cured. The lower limit of the amount of the imide oligomer is more preferably 25 parts by weight and the upper limit thereof is more preferably 75 parts by weight.

When the imide oligomer according to the present invention is contained in the imide oligomer composition described above, the amount of the imide oligomer means the amount of the imide oligomer composition (in the case of further using other imide oligomer(s), the total of the imide oligomer composition and other imide oligomer(s)).

The curable resin and the curing agent are each preferably free from a compound having a siloxane skeleton. The use of the curable resin and the curing agent each free from a compound having a siloxane skeleton can prevent trouble such as contact failures due to a low-molecular-weight siloxane compound derived from the curable resin composition.

The curable resin composition of the present invention contains a thermally conductive filler. The curable resin composition of the present invention containing a thermally conductive filler has excellent thermal conductivity.

The "thermally conductive filler" as used herein refers to a filler having a thermal conductivity of 10 W/m·K or more.

From the standpoint of thermal conductivity, the thermally conductive filler preferably includes at least one selected from the group consisting of alumina, aluminum nitride, silicon carbide, boron nitride, silicon nitride, magnesium oxide, zinc oxide, boron carbide, titanium carbide, zirconia, aluminum, and diamond.

Examples of the shape of the thermally conductive filler include a plate shape, a spherical shape, an irregular shape, a crushed shape, and a polygonal shape. The thermally conductive filler may be in the form of aggregated particles in which primary particles such as plate-like fillers are aggregated.

The lower limit of the average particle size of the thermally conductive filler is preferably 0.1 um and the upper limit thereof is preferably 300 um. With the average particle size of the thermally conductive filler being within this range, the resulting curable resin composition has better coating properties and better thermal conductivity. The lower limit of the average particle size of the thermally conductive filler is more preferably 0.2 um and the upper limit thereof is more preferably 200 um.

The average particle size of the thermally conductive filler can be determined by the measurement on the thermally conductive filler dispersed in a solvent such as water or an organic solvent using a particle size distribution analyzer such as NICOMP 380ZLS (available from PARTICLE SIZING SYSTEMS).

The lower limit of the proportion of the thermally conductive filler in the curable resin composition (excluding the solvent) of the present invention is preferably 50% by volume. When the proportion of the thermally conductive filler is 50% by volume or more, the resulting curable resin composition has better thermal conductivity. The lower limit of the proportion of the thermally conductive filler is more preferably 60% by volume.

From the standpoint of coating properties and adhesiveness, the upper limit of the proportion of the thermally conductive filler is preferably 95% by volume, more preferably 90% by volume.

The curable resin composition of the present invention may contain a different filler having a thermal conductivity of less than 10 W/m·K in addition to the above thermally conductive filler, as long as the aim of the present invention is not impaired.

The different filler used may be an inorganic filler or an organic filler.

Examples of the inorganic filler include silica, barium sulfate, glass powder, glass frit, glass fiber, and inorganic ion exchangers. Preferred among these are silica and barium sulfate.

Examples of the organic filler include silicone rubber particles, acrylic rubber particles, urethane rubber particles,

polyamide particles, polyamideimide particles, polyimide particles, benzoguanamine particles, and any of these particles with a core-shell structure. Preferred among these are polyamide particles, polyamideimide particles, and polyimide particles.

The different fillers may be used alone or in combination of two or more thereof.

The curable resin composition of the present invention preferably contains a dispersant.

When the curable resin composition of the present invention contains a dispersant, the dispersion state of the thermally conductive filler in the composition can be easily made uniform.

Examples of the dispersant include modified polyester compounds, modified polyether compounds, phosphate esters of modified polyether compounds, fatty acid derivatives, fatty acid polycarboxylic acid amine salts, cationic group-containing acrylic polymers, and polyurethane compounds. These dispersants may be used alone or in combination of two or more thereof.

The lower limit of the amount of the dispersant in 100 parts by weight of the curable resin composition of the present invention is preferably 0.05 parts by weight and the upper limit thereof is preferably 4 parts by weight. With the amount of the dispersant within this range, the dispersion state of the thermally conductive filler in the composition is more easily made uniform. The lower limit of the amount of the dispersant is more preferably 0.1 parts by weight and the upper limit thereof is more preferably 3 parts by weight.

The curable resin composition of the present invention preferably contains a curing accelerator. When the curable resin composition of the present invention contains a curing accelerator, the curing time of the composition can be shortened, improving the productivity.

Examples of the curing accelerator include imidazole curing accelerators, tertiary amine curing accelerators, phosphine curing accelerators, phosphorus curing accelerators, photo base generators, and sulfonium salt curing accelerators. Preferred among these are imidazole curing accelerators from the standpoint of storage stability. The curing accelerators may be used alone or in combination of two or more thereof.

The lower limit of the amount of the curing accelerator is preferably 0.01 parts by weight and the upper limit thereof is preferably 10 parts by weight, relative to 100 parts by weight of the total of the curable resin, the curing agent, and the curing accelerator. When the amount of the curing accelerator is within this range, the effect of shortening the curing time is enhanced while excellent properties such as adhesiveness are maintained. The lower limit of the amount of the curing accelerator is more preferably 0.05 parts by weight and the upper limit thereof is more preferably 5 parts by weight.

The curable resin composition of the present invention may contain a polymer component as long as the aim of the present invention is not impaired. The polymer component serves as a film-forming component, and the use of the polymer component can improve the handleability of the film formed using the resulting curable resin composition.

The lower limit of the number average molecular weight of the polymer component is preferably 5,000 and the upper limit thereof is preferably 100,000. When the number average molecular weight of the polymer component is within this range, the resulting curable resin composition has better flexibility and better processability before being cured and better heat resistance after being cured. The lower limit of the number average molecular weight of the polymer component is more preferably 8,000 and the upper limit thereof is more preferably 80,000.

Examples of the polymer component include polyimides, phenoxy resins, polyamides, polyamideimides, polymaleimides, cyanate resins, benzoxazine resins, acrylic resins, urethane resins, and polyesters. Preferred among these are phenoxy resins and polyimides, and more preferred are polyimides, from the standpoint of heat resistance and handleability. The polymer components may be used alone or in combination of two or more thereof.

The lower limit of the amount of the polymer component is preferably 0.5 parts by weight and the upper limit thereof is preferably 50 parts by weight, relative to 100 parts by weight of the total of the curable resin, the curing agent (as well as the curing accelerator, if present), and the polymer component. When the amount of the polymer component is within this range, the cured product of the resulting curable resin composition has better heat resistance. The lower limit of the amount of the polymer component is more preferably 1 part by weight and the upper limit thereof is more preferably 40 parts by weight.

The curable resin composition may contain a solvent or a reactive diluent from the standpoint of properties such as coating properties and handleability.

The solvent is preferably a solvent having a boiling point of lower than 200°C from the standpoint of the properties such as coating properties and storage stability.

Examples of the solvent having a boiling point of lower than 200°C include alcoholic solvents, ketone solvents, ester solvents, hydrocarbon solvents, halogen solvents, ether solvents, and nitrogen-containing solvents.

Examples of the alcoholic solvents include methanol, ethanol, isopropyl alcohol, normal propyl alcohol, isobutyl alcohol, normal butyl alcohol, tertiary butyl alcohol, and 2-ethylhexanol.

Examples of the ketone solvents include acetone, methyl ethyl ketone, methyl isobutyl ketone, methyl propyl ketone, diisobutyl ketone, cyclohexanone, methylcyclohexanone, and diacetone alcohol.

Examples of the ester solvents include methyl acetate, ethyl acetate, butyl acetate, isobutyl acetate, methoxybutyl acetate, amyl acetate, normal propyl acetate, isopropyl acetate, methyl lactate, ethyl lactate, and butyl lactate.

Examples of the hydrocarbon solvents include benzene, toluene, xylene, normal hexane, isohexane, cyclohexane, methylcyclohexane, ethylcyclohexane, isooctane, normal decane, and normal heptane.

Examples of the halogen solvents include dichloromethane, chloroform, and trichlorethylene.

Examples of the ether solvents include diethyl ether, tetrahydrofuran, 1,4-dioxane, 1,3-dioxolane, diisopropyl ether, ethylene glycol monomethyl ether, ethylene glycol monoethyl ether, ethylene glycol monobutyl ether, propylene glycol monomethyl ether acetate, propylene glycol monomethyl ether, 3-methoxy-3-methyl-1-butanol, ethylene glycol monotertiary butyl ether, propylene glycol monomethyl ether propionate, 3-methoxybutanol, diethylene glycol dimethyl ether, anisole, and 4-methylanisole.

Examples of the nitrogen-containing solvents include acetonitrile, N,N-dimethylformamide, N,N-dimethylacetamide, and N-methylpyrrolidone.

From the standpoint of the handleability, the solubility of the imide oligomer, and the like, the solvent is preferably at least one selected from the group consisting of a ketone solvent having a boiling point of 60°C or higher but lower than 200°C, an ester solvent having a boiling point of 60°C or higher but lower than 200°C, and an ether solvent having a boiling point of 60°C or higher but lower than 200°C. Examples of such solvents include methyl ethyl ketone, methyl isobutyl ketone, ethyl acetate, isobutyl acetate, 1,4-dioxane, 1,3-dioxolane, tetrahydrofuran, cyclohexanone, methylcyclohexanone, diethylene glycol dimethyl ether, and anisole.

The "boiling point" is a value measured at 101 kPa or a value converted to correspond to 101 kPa with a boiling point conversion chart, for example.

The reactive diluent is preferably a reactive diluent having one or more reactive functional groups in one molecule.

Examples of the reactive diluent having one or more reactive functional groups in one molecule include monofunctional epoxy resins.

Examples of the monofunctional epoxy resins include monoglycidyl compounds and monoalicyclic epoxy compounds.

Examples of the monoglycidyl compounds include tert-butylphenyl glycidyl ether, 2-ethylhexyl glycidyl ether, allyl glycidyl ether, phenyl glycidyl ether, 3-glycidoxypropyltrimethoxysilane, 3-glycidoxypropylmethyldimethoxysilane, 1-(3-glycidoxypropyl) 1,1,3,3,3-pentamethyldisiloxane, and N-glycidyl-N,N-bis[3-(trimethoxysilyl)propyl]amine.

Examples of the monoalicyclic epoxy compounds include 2-(3,4-epoxycyclohexyl)ethyltrimethoxysilane. These reactive diluents may be used alone or in combination of two or more thereof.

The lower limit of the amount of the solvent or reactive diluent in 100 parts by weight of the curable resin composition of the present invention is preferably 0.5 parts by weight and the upper limit thereof is preferably 30 parts by weight. When the amount of the solvent is within this range, the resulting curable resin composition has better coating properties and the like. The lower limit of the amount of the solvent or reactive diluent is more preferably 1 part by weight and the upper limit thereof is more preferably 20 parts by weight.

The curable resin composition of the present invention may further contain additives such as a coupling agent, a storage stabilizer, a bleeding preventing agent, a flux agent, and a leveling agent to the extent that the aim of the present invention is not impaired.

The curable resin composition of the present invention is preferably free from a compound having an amide skeleton. When containing a compound having an amide skeleton, the curable resin composition has higher viscosity due to the hydrogen bonding property of the amide group, which makes it difficult to highly fill the composition with the thermally conductive filler, possibly resulting in lower thermal conductivity. Moreover, such a curable resin composition may have higher water absorbency, which may lower the adhesive force after moisture absorption.

The curable resin composition of the present invention may be produced by, for example, a method including mixing the curable resin, the curing agent, the polymer component, and the like using a mixer and then further mixing the thermally conductive filler, the dispersant, and the like. Examples of the mixer include a homogenizing disperser, a universal mixer, a Banbury mixer, and a kneader.

The lower limit of the viscosity at 25°C of the curable resin composition of the present invention is preferably 10 mPa·s and the upper limit thereof is preferably 600 mPa·s. When the viscosity at 25°C is within this range, the curable resin composition of the present invention is excellent in coating properties. The lower limit of the viscosity at 25°C is more preferably 20 mPa·s, and the upper limit thereof is more preferably 500 mPa·s.

The term "viscosity" as used herein means the value measured at 10 rpm using an E-type viscometer. Examples of the E-type viscometer include TPE-100 (available from Toki Sangyo Co., Ltd.).

The lower limit of the shear adhesive force of a cured product of the curable resin composition of the present invention to aluminum is preferably 4 MPa. When the shear adhesive force of the cured product to aluminum is 4 MPa or more, the curable resin composition of the present invention can be suitably used as a thermally conductive adhesive. The lower limit of the shear adhesive force of the cured product to aluminum is more preferably 5 MPa.

The preferable upper limit of the shear adhesive force of the cured product to aluminum is not limited, but the

upper limit is practically 20 MPa.

The shear adhesive force of the cured product to aluminum can be determined by pulling a test piece at 25°C at a tensile speed of 1 mm/min using a Tensilon universal testing machine ("RTC-1350A" available from A&D Company, Ltd.) in conformity with JIS K 6850 and calculating the stress upon peeling of the test piece. The test piece used may be prepared by applying the curable resin composition to a thickness after drying of about 100 um, drying the composition to remove the solvent, and attaching aluminum substrates having a thickness of 25 mm to both surfaces of the curable resin composition such that the contact portion has a width of 12.5 mm, followed by heating at 190°C for one hour. The aluminum substrate used may be, for example, A-1050P.

The lower limit of the 1% weight loss temperature after curing of the curable resin composition of the present invention is preferably 350°C.

When the 1% weight loss temperature after curing is 350°C or higher, the curable resin composition of the present invention can be suitably used as a thermally conductive adhesive (heat dissipation adhesive) that particularly requires heat resistance.

The 1% weight loss temperature can be obtained by performing thermogravimetric analysis using a thermogravimetric analyzer under the heating conditions from 30°C to 500°C at a heating rate of 10°C/min. Examples of the thermogravimetric analyzer include TG/DTA6200 (available from Hitachi High-Tech Science Corporation). The cured product used for measuring the 1% weight loss temperature may be prepared by applying the curable resin composition to a substrate PET film to a thickness after drying of 100 um, drying the composition, and curing it by heating at 190°C for one hour.

The present invention also encompasses a cured product of the curable resin composition of the present invention.

The present invention also encompasses an adhesive produced using the curable resin composition of the present invention.

An adhesive film can be obtained, for example, by a method including applying the adhesive of the present invention to a substrate film and then drying the adhesive. The present invention also encompasses an adhesive film produced using the adhesive of the present invention.

The adhesive of the present invention can be suitably used as a thermally conductive adhesive (heat dissipation adhesive). The adhesive film of the present invention can be suitably used as a thermally conductive adhesive film (heat dissipation adhesive film).

- Advantageous Effects of Invention

The present invention can provide a curable resin composition excellent in heat resistance, thermal conductivity, and adhesiveness. The present invention can also provide a cured product of the curable resin composition, and an adhesive and an adhesive film each produced using the curable resin composition.

DESCRIPTION OF EMBODIMENTS

The present invention will be described in more detail with reference to examples below, but the present invention is not limited to these examples.

(Synthesis Example 1 (production of imide oligomer composition A))

1,4-Bis(2-(4-aminophenyl)-2-propyl)benzene ("Bisaniline P" available from Mitsui Fine Chemicals, Inc.) in an amount of 17.2 parts by weight was dissolved in 200 parts by weight of N-methylpyrrolidone (available from Tokyo Chemical Industry Co., Ltd.). To the resulting solution was added 52.0 parts by weight of 4,4'-(4,4'-isopropylidenediphenoxy)diphthalic anhydride (available from Tokyo Chemical Industry Co., Ltd.). The mixture was reacted by stirring at 25°C for two hours to give an amic acid oligomer solution. The N-methylpyrrolidone was removed from the obtained amic acid oligomer solution by pressure reduction, followed by heating at 300°C for two hours to give an imide oligomer composition A (imidization ratio: 97%).

The resulting imide oligomer composition A was subjected to $^{1}$H-NMR, GPC, and FT-IR analysis. As a result, the imide oligomer composition A was found to contain an imide oligomer having a structure represented by the formula (5-1) or (5-3) (wherein A is a 4,4'-(4,4'-isopropylidenediphenoxy)diphthalic anhydride residue and B is a 1,4-bis(2-(4-aminophenyl)-2-propyl)benzene residue). The number average molecular weight of the imide oligomer composition A was 1,500.

(Synthesis Example 2 (production of imide oligomer composition B))

4,4'-(4,4'-Isopropylidenediphenoxy)diphthalic anhydride (available from Tokyo Chemical Industry Co., Ltd.) in an amount of 104 parts by weight was dissolved in 300 parts by weight of N-methylpyrrolidone ("NMP" available from Fujifilm Wako Pure Chemical Industries, Ltd.). To the resulting solution was added a solution prepared by diluting 28 parts by weight of Priamine 1074 (available from Croda International Plc), which is a dimer diamine, with 100 parts by weight of N-methylpyrrolidone. The mixture was reacted by stirring at 25°C for two hours to give an amic acid oligomer solution. The N-methylpyrrolidone was removed from the obtained amic acid oligomer solution by pressure reduction, followed by heating at 300°C for two hours to give an imide oligomer composition B (imidization ratio: 93%).

The resulting imide oligomer composition B was subjected to $^1$H-NMR, GPC, and FT-IR analysis. As a result, the imide oligomer composition B was found to contain an imide oligomer having a structure represented by the formula (5-1) or (5-3) (wherein A is a 4,4'-(4,4'-isopropylidenediphenoxy)diphthalic anhydride residue and B is a dimer diamine residue). The number average molecular weight of the imide oligomer composition B was 2,200.

(Synthesis Example 3 (production of imide oligomer composition C))

3-Aminophenol (available from Tokyo Chemical Industry Co., Ltd.) in an amount of 21.8 parts by weight was dissolved in 200 parts by weight of N-methylpyrrolidone (available from Tokyo Chemical Industry Co., Ltd.). To the resulting solution was added 17.2 parts by weight of 4,4'-(4,4'-isopropylidenediphenoxy)diphthalic anhydride (available from Tokyo Chemical Industry Co., Ltd.). The mixture was reacted by stirring at 25°C for two hours to give an amic acid oligomer solution. The N-methylpyrrolidone was removed from the obtained amic acid oligomer solution by pressure reduction, followed by heating at 300°C for two hours to give an imide oligomer composition C (imidization ratio: 96%).

The obtained imide oligomer composition C was subjected to $^1$H-NMR, GPC, and FT-IR analysis. As a result, the imide oligomer composition C was found to contain an imide oligomer having a structure represented by the formula (6-1) (wherein A is a 4,4'-(4,4'-isopropylidenediphenoxy)diphthalic anhydride residue and R is a hydrogen atom). The number average molecular weight of the imide oligomer composition C was 700.

(Synthesis Example 4 (production of cyclohexanone solution of polyimide resin))

A reaction vessel equipped with a stirrer, a water divider, and a nitrogen gas inlet was charged with 54.6 parts by weight of 4,4'-(4,4'-isopropylidenediphenoxy)diphthalic anhydride (available from Tokyo Chemical Industry Co., Ltd.) and 150 parts by weight of cyclohexanone, followed by dissolution of the anhydride. To the resulting solution was added dropwise a mixed solution of 56.1 parts by weight of Priamine 1074 (available from Croda International Plc), which is a dimer diamine, and 55.0 parts by weight of cyclohexanone, followed by imidization reaction at 150°C for eight hours to give a polyimide resin solution. The obtained polyimide resin solution had a solid content concentration of 45% by weight and the number average molecular weight of the polyimide resin was 27,000.

(Examples 1 to 10, Comparative Examples 1 to 3)

According to the formulation ratio shown in Table 1, the materials were mixed with stirring to give blends 1 to 7. Next, according to the formulation ratio shown in Table 2, the blends and the materials were mixed with stirring to give curable resin compositions of Examples 1 to 10 and Comparative Examples 1 to 3.

Each curable resin composition obtained was applied to a substrate PET film to a thickness after drying of 100 um, followed by drying at 100°C for 10 minutes to give a curable resin composition film.

(Thermal conductivity after curing)

The curable resin composition films obtained in the examples and comparative examples were each heated at 190°C for one hour to give a cured product. The thermal conductivity of the obtained cured product was measured at 23°C using T3Ster DynTIM Tester (available from Mentor, a Siemens Business) as a measuring device. Table 2 shows the results.

<Evaluation>

The curable resin compositions obtained in the examples and comparative examples were each evaluated as follows. Table 2 shows the results.

(Handleability of film before being cured)

The curable resin composition films (after being dried and before being cured with heat) obtained in the examples and comparative examples were each subjected to a test in which the film was wound around a cylinder having a diameter of 5 mm at 25°C and examined for the presence or absence of a fracture or chip in the heat curable adhesive film.
The handleability was evaluated as "o (Good)" when no fracture or chip was present, "Δ (Fair)" when a fracture or chip was partly present, and "× (Poor)" when a crack or fracture was present over the entire film surface.

(Shear adhesive force of cured product to aluminum)

Aluminum substrates with a thickness of 25 mm "A-1050P" were attached to both sides of each of the curable resin composition films obtained in the examples and comparative examples such that the contact portion had a width of 12.5 mm, followed by heating at 190°C for one hour. Thus, a test piece was produced. Using the obtained test piece, the shear adhesive force (immediately after curing) of the cured product to aluminum was measured in conformity with JIS K6850, using a Tensilon universal testing machine ("RTC-1350A" available from A&D Company Ltd.) at 25°C at a tensile speed of 1 mm/min.
After storage of the test piece at 120°C and 85% RH for 192 hours, the shear adhesive force (after storage at 120°C and 85% RH for 192 hours) of the cured product to aluminum under the same conditions as above was measured.

(Heat resistance: 1% weight loss temperature)

The curable resin compositions obtained in the examples and comparative examples were each applied to a substrate PET film to a thickness after drying of 100 um, followed by drying and subsequent curing by heating at 190°C for one hour. Thus, a cured product was produced.
The 1% weight loss temperature of the obtained cured product was measured using a thermogravimetric analyzer ("TG/DTA6200" available from Hitachi High-Tech Science Co., Ltd.) in a temperature range of 30°C to 500°C under the heating conditions of 10°C/min.

[Table 1]

| | | | Blend | | | | | | |
|---|---|---|---|---|---|---|---|---|---|
| | | | 1 | 2 | 3 | 4 | 5 | 6 | 7 |
| Formulation (parts by weight) | Curable resin | Bisphenol F epoxy resin ("EPICLON EXA-830CRP" available from DIC Corporation) | 10.0 | 10.0 | 100 | 100 | 100 | 100 | 10.0 |
| | Curing agent | Imide oligomer composition A (number average molecular weight: 1,500) | 16.9 | - | - | - | 16.2 | 16.2 | - |
| | | Imide oligomer composition B (number average molecular weight: 2,200) | - | 19.6 | - | - | - | - | - |
| | | Imide oligomer composition C (number average molecular weight: 700) | - | - | 17.6 | - | - | - | - |
| | | Acid anhydride curing agent ("YH-307" available from Mitsubishi Chemical Corporation) | - | - | - | 5.9 | - | - | - |
| | Curing accelerator | 2-Phenyl-4-hydroxymethyl-5-methylimidazole ("2P4MHZ" available from Shikoku Kasei Holdings Corporation) | 0.3 | 0.3 | 0.3 | 0.2 | 0.3 | 0.3 | 0.3 |
| | Polymer component | Cyclohexanone solution of polyimide resin (number average molecular weight of polyimide resin: 27,000, solid content concentration: 35 wt%) | 15.4 | 16.9 | 15.8 | - | - | - | - |
| | | Phenoxy resin ("jER1256" available from Mitsubishi Chemical Corporation) (number average molecular weight: 10,000) | - | - | - | 3.2 | 5.4 | - | - |
| | | NMP/xylene/MEK solution of polyamideimide resin ("Vylomax HR-12N2" available from Toyobo Co., Ltd.) (number average molecular weight of polyamideimide resin: 5,600, solid content concentration: 30 wt%) | - | - | - | - | - | - | 33.3 |
| | Solvent | Diethylene glycol dimethyl ether (available from Fujifilm Wako Pure Chemical Corporation) | 29.8 | 32.8 | 30.5 | 23.4 | 39.0 | 32.4 | 1.4 |

[Table 2]

[Table 2a]

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Formulation (parts by weight) | Blend 1 | | - | - | 1 | - | - | - | - | - | - | - |
| | Blend 2 | | 1 | 1 | — | — | 1 | 1 | 1 | 1 | - | - |
| | Blend 3 | | - | - | - | 1 | - | - | - | - | - | - |
| | Blend 4 | | - | - | - | - | - | - | - | - | - | - |
| | Blend 5 | | - | - | - | - | - | - | - | - | 1 | - |
| | Blend 6 | | - | - | - | - | - | - | - | - | - | 1 |
| | Blend 7 | | - | - | - | - | - | - | - | - | - | - |
| | Thermally conductive filler | Alumina ("AS-40" available from Showa Denko K.K., average particle size: 12 μm) | 7 | 10 | 7 | 7 | - | 3 | - | 3 | 7 | 7 |
| | | Aluminum nitride ("HF-05" available from Tokuyama Corporation, average particle size: 5 μm) | - | - | - | - | 3.5 | - | - | - | - | - |
| | | Boron nitride ("UHP-G1H" available from Showa Denko K.K., average particle size of aggregated particles: 33 μm) | - | - | - | - | - | - | 2.4 | - | - | - |
| | | Diamond ("Diamond powder, natural" available from Fujifilm Wako Pure Chemical Corporation, average particle size: 40 to 60 μm) | - | - | - | - | - | - | - | 1 | - | - |
| | Different filler | Silica ("SO-C6" available from Admatechs, average particle size: 2 μm) | - | - | - | - | - | - | - | - | - | - |
| | Dispersant | Phosphoric acid ester of modified polyether compound ("BYK111" available from BYK Japan K.K.) | 0.04 | 0.04 | 0.04 | 0.04 | 0.04 | 0.04 | 0.04 | 0.04 | 0.04 | 0.04 |
| Thermal conductivity after curing (W/m·K) | | | 3.2 | 5.7 | 3.5 | 3.4 | 7.5 | 1.5 | 9.5 | 11.5 | 3.3 | 3.2 |
| Proportion of thermally conductive filler (different filler in Comparative Example 2) (vol%) | | | 80 | 85 | 80 | 80 | 70 | 63 | 70 | 70 | 80 | 80 |
| Evaluation | Handleability of film before being cured | | ○ | ○ | ○ | ○ | ○ | ○ | ○ | ○ | ○ | △ |
| | Shear adhesive force of cured product to aluminum (immediately after being cured) (MPa) | | 8.4 | 9.5 | 8.2 | 5.8 | 10.7 | 12.0 | 6.5 | 10.0 | 7.8 | 9.6 |
| | Shear adhesive force of cured product to aluminum (after storage at 120°C and 85%RH for 192 hours) (MPa) | | 8.0 | 8.6 | 7.7 | 4.9 | 9.2 | 11.0 | 6.0 | 9.2 | 7.3 | 9.0 |
| | Heat resistance | 1% Weight loss temperature (°C) | 374 | 395 | 378 | 400 | 388 | 355 | 365 | 368 | 360 | 365 |

[Table 2b]

| | | | Comparative Example 1 | Comparative Example 2 | Comparative Example 3 |
|---|---|---|---|---|---|
| Formulation (parts by weight) | Thermally conductive filler | Blend 1 | - | - | - |
| | | Blend 2 | - | 1 | - |
| | | Blend 3 | - | - | - |
| | | Blend 4 | 1 | - | - |
| | | Blend 5 | - | - | - |
| | | Blend 6 | - | - | - |
| | | Blend 7 | - | - | 1 |
| | | Alumina ("AS-40" available from Showa Denko K.K., average particle size: 12 µm) | 7 | - | 3 |
| | | Aluminum nitride ("HF-05" available from Tokuyama Corporation, average particle size: 5 µm) | - | - | - |
| | | Boron nitride ("UHP-G1H" available from Showa Denko K.K., average particle size of aggregated particles: 33 µm) | - | - | - |
| | | Diamond ("Diamond powder, natural" available from Fujifilm Wako Pure Chemical Corporation, average particle size: 40 to 60 µm) | - | - | - |
| | Different filler | Silica ("SO-C6" available from Admatechs, average particle size: 2 µm) | - | 4 | - |
| | Dispersant | Phosphoric acid ester of modified polyether compound ("BYK111" available from BYK Japan K.K.) | 0.04 | 0.04 | 0.04 |
| Thermal conductivity after curing (W/m·K) | | | 2.8 | 0.4 | 1.2 |
| Proportion of thermally conductive filler (different filler in Comparative Example 2) (vol%) | | | 80 | 80 | 63 |
| Evaluation | Handleability of film before being cured | | ○ | ○ | ○ |
| | Shear adhesive force of cured product to aluminum (immediately after being cured) (MPa) | | 7.6 | 7.0 | 4.8 |
| | Shear adhesive force of cured product to aluminum (after storage at 120°C and 85%RH for 192 hours) (MPa) | | 7.0 | 6.5 | 1.0 |
| | Heat resistance | 1% Weight loss temperature (°C) | 330 | 370 | 362 |

INDUSTRIAL APPLICABILITY

The present invention can provide a curable resin composition excellent in heat resistance, thermal conductivity, and adhesiveness. The present invention can also provide a cured product of the curable resin composition, and an adhesive and an adhesive film each produced using the curable resin composition.

## Claims

1. A curable resin composition comprising:

   a curable resin;
   a curing agent; and
   a thermally conductive filler,
   the curing agent comprising an imide oligomer,
   the curable resin composition having a thermal conductivity after curing of 1 W/m·K or more.

2. The curable resin composition according to claim 1,
   wherein the curable resin and the curing agent are each free from a compound having a siloxane skeleton.

3. The curable resin composition according to claim 1 or 2,
   wherein the curable resin comprises at least one selected from the group consisting of an epoxy resin, a cyanate resin, a maleimide resin, and a benzoxazine resin.

4. The curable resin composition according to claim 1, 2, or 3,
   wherein the imide oligomer has a molecular weight of 5,000 or less.

5. The curable resin composition according to claim 1, 2, 3, or 4,
   wherein the imide oligomer has a reactive functional group capable of reacting with the curable resin.

6. The curable resin composition according to claim 5,
   wherein the reactive functional group is at least one selected from the group consisting of an acid anhydride group, a phenolic hydroxy group, and an amino group.

7. The curable resin composition according to claim 1, 2, 3, 4, 5, or 6,
   wherein the thermally conductive filler comprises at least one selected from the group consisting of alumina, aluminum nitride, silicon carbide, boron nitride, silicon nitride, magnesium oxide, zinc oxide, boron carbide, titanium carbide, zirconia, aluminum, and diamond.

8. The curable resin composition according to claim 1, 2, 3, 4, 5, 6, or 7,
   wherein the proportion of the thermally conductive filler in the curable resin composition excluding a solvent is 50% by volume or more.

9. The curable resin composition according to claim 1, 2, 3, 4, 5, 6, 7, or 8, further comprising a polymer component, wherein the polymer component has a number average molecular weight of 5,000 or more.

10. The curable resin composition according to claim 1, 2, 3, 4, 5, 6, 7, 8, or 9, which is free from a compound having an amide skeleton.

11. The curable resin composition according to claim 1, 2, 3, 4, 5, 6, 7, 8, 9, or 10,
    wherein a cured product of the curable resin composition has a shear adhesive force to aluminum of 4 MPa or more.

12. The curable resin composition according to claim 1, 2, 3, 4, 5, 6, 7, 8, 9, 10, or 11, which has a 1% weight loss temperature after curing of 350°C or higher.

13. A cured product of the curable resin composition according to claim 1, 2, 3, 4, 5, 6, 7, 8, 9, 10, 11, or 12.

14. An adhesive comprising
    the curable resin composition according to claim 1, 2, 3, 4, 5, 6, 7, 8, 9, 10, 11, or 12.

15. An adhesive film produced using the cured product according to claim 13 or the adhesive according to claim 14.

**INTERNATIONAL SEARCH REPORT**

International application No.
**PCT/JP2022/017656**

**A. CLASSIFICATION OF SUBJECT MATTER**

***C08G 59/40***(2006.01)i; ***C08G 73/10***(2006.01)i; ***C09J 11/04***(2006.01)i; ***C09J 11/06***(2006.01)i; ***C08L 101/00***(2006.01)i; ***C09J 163/00***(2006.01)i; ***C09J 179/02***(2006.01)i; ***C09J 179/04***(2006.01)i; ***C09J 201/00***(2006.01)i; ***C09J 7/35***(2018.01)i
FI: C08L101/00; C08G73/10; C09J11/04; C09J201/00; C09J163/00; C09J179/04; C09J179/02; C09J11/06; C09J7/35; C08G59/40

According to International Patent Classification (IPC) or to both national classification and IPC

**B. FIELDS SEARCHED**

Minimum documentation searched (classification system followed by classification symbols)

C08G59/40; C08G73/10; C09J11/04; C09J11/06; C08L101/00; C09J163/00; C09J179/02; C09J179/04; C09J201/00; C09J7/35

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-149910 A (LINTEC CORP.) 31 August 2017 (2017-08-31) claims, paragraphs [0046], [0061], examples | 1-15 |
| Y | WO 2018/139558 A1 (SEKISUI CHEMICAL CO., LTD.) 02 August 2018 (2018-08-02) claims, paragraphs [0007], [0058], [0059], [0061]-[0063], [0075], examples | 1-15 |
| A | JP 2010-132793 A (TORAY INDUSTRIES, INC.) 17 June 2010 (2010-06-17) entire text | 1-15 |
| A | JP 2010-189470 A (HITACHI CHEMICAL CO., LTD.) 02 September 2010 (2010-09-02) entire text, all drawings | 1-15 |
| A | JP 2012-77172 A (SEKISUI CHEMICAL CO., LTD.) 19 April 2012 (2012-04-19) entire text, all drawings | 1-15 |
| A | JP 2015-108139 A (NIPPON KAYAKU CO., LTD.) 11 June 2015 (2015-06-11) entire text | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2022** | **21 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/017656**

**C. DOCUMENTS CONSIDERED TO BE RELEVANT**

| Category* | Citation of document, with indication, where appropriate, of the relevant passages | Relevant to claim No. |
|---|---|---|
| A | JP 2016-172824 A (NIPPON KAYAKU CO., LTD.) 29 September 2016 (2016-09-29) entire text | 1-15 |
| A | JP 2018-87305 A (PANASONIC INTELLECTUAL PROPERTY MANAGEMENT CO., LTD.) 07 June 2018 (2018-06-07) entire text | 1-15 |
| A | WO 2020/054218 A1 (SEKISUI CHEMICAL CO., LTD.) 19 March 2020 (2020-03-19) entire text | 1-15 |

Form PCT/ISA/210 (second sheet) (January 2015)

**INTERNATIONAL SEARCH REPORT**
**Information on patent family members**

International application No.
**PCT/JP2022/017656**

| Patent document cited in search report | Publication date (day/month/year) | Patent family member(s) | Publication date (day/month/year) |
|---|---|---|---|
| JP 2017-149910 A | 31 August 2017 | (Family: none) | |
| WO 2018/139558 A1 | 02 August 2018 | US 2021/0130536 A1<br>claims, paragraphs [0011], [0071], [0072], [0074]-[0076], [0104], examples<br>CN 109415509 A<br>KR 10-2019-0103939 A<br>TW 201840701 A | |
| JP 2010-132793 A | 17 June 2010 | (Family: none) | |
| JP 2010-189470 A | 02 September 2010 | (Family: none) | |
| JP 2012-77172 A | 19 April 2012 | (Family: none) | |
| JP 2015-108139 A | 11 June 2015 | US 2016/0194542 A1<br>entire text<br>TW 201516089 A | |
| JP 2016-172824 A | 29 September 2016 | (Family: none) | |
| JP 2018-87305 A | 07 June 2018 | (Family: none) | |
| WO 2020/054218 A1 | 19 March 2020 | CN 112533906 A<br>KR 10-2021-0057004 A<br>TW 202012494 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003193016 A
- JP 2005113059 A